# EUROPÄISCHE PATENTSCHRIFT

(11) **EP 4 346 523 B1**
(45) Veröffentlichungstag und Bekanntmachung des Hinweises auf die Patenterteilung: **26.02.2025**
(21) Anmeldenummer: 22817182.3
(22) Anmeldetag: 10.11.2022
(51) Int. Cl.: A47J 31/60

(54) **REINIGUNGSVORRICHTUNG FÜR EINE GETRÄNKEZUBEREITUNGSMASCHINE UND VERFAHREN ZUR REINIGUNG EINER GETRÄNKEZUBEREITUNGSMASCHINE**
CLEANING DEVICE FOR A BEVERAGE PREPARING MACHINE AND METHOD FOR CLEANING A BEVERAGE PREPARING MACHINE
DISPOSITIF DE NETTOYAGE POUR MACHINE DE PREPARATION DE BOISSONS ET PROCEDE DE NETTOYAGE D'UNE MACHINE DE PREPARATION DE BOISSONS

(30) Priorität: 16.12.2021 DE 102021133520
(43) Veröffentlichungstag der Anmeldung: 10.04.2024
(73) Patentinhaber: Eversys S.A., 3960 Sierre (CH)
(72) Erfinder: SCHINDLER, Thorsten, 3970 Salgesch (CH); BESSE, Jonathan, 1955 Chamoson (CH); LOCHER, Grégoire, 1976 Daillon (CH); ROBYR, Sébastien, 3960 Sierre (CH); CONSTANTIN, David, 3968 Veyras (CH)
(74) Vertreter: Charrier Rapp & Liebau
(86) Internationale Anmeldenummer: PCT/EP2022/081381
(87) Internationale Veröffentlichungsnummer: WO 2023/110233

(56) Entgegenhaltungen:
- CH-A1- 709 738
- US-A- 5 551 988
- US-A1- 2014 060 338

## Beschreibung

Die Erfindung betrifft eine Reinigungsvorrichtung für eine Getränkezubereitungsmaschine nach Anspruch 1 sowie ein Verfahren zur Reinigung einer Getränkezubereitungsmaschine nach Anspruch 10.

Zur Reinigung von Getränkezubereitungsmaschinen, wie zum Beispiel von halb- oder vollautomatischen Kaffeemaschinen, sind aus dem Stand der Technik Reinigungsvorrichtungen bekannt, die in die Getränkezubereitungsmaschine integriert sind. Die Reinigungsvorrichtung wird dabei in vorgegebenen Reinigungszyklen sowohl während des Betriebs als auch nach dem Ausschalten der Getränkezubereitungsmaschine eingesetzt, um beispielsweise die kaffee- und milchführenden Bauteile von Kaffee- und Milchresten sowie von Verunreinigungen zu reinigen und die Getränkezubereitungsmaschine auf diese Weise stets unter einwandfreien hygienischen Bedingungen zu halten. Die Reinigungszyklen können dabei entweder von einem Bediener manuell gestartet oder automatisch von einer Steuerung der Getränkezubereitungsmaschine eingeleitet werden.

Zur automatischen Reinigung von Getränkezubereitungsmaschinen sind aus dem Stand der Technik Reinigungsvorrichtungen bekannt, in denen eine Kartusche mit einem darin eingefügten Reinigungsmittel eingesetzt wird. Eine solche Reinigungsvorrichtung ist bspw. aus der DE 10 2015 108 438 A1 bekannt, in der eine mit einem Reinigungsmittel gefüllte Kartusche an eine Flüssigkeitszufuhr zur Heißgetränkebereitung in der Getränkezubereitungsmaschine angeschlossen wird, um eine Flüssigkeit, insbesondere Wasser, in die Kartusche zu leiten und das in der Kartusche befindliche feste Reinigungsmittel aufzulösen. Dabei kann sichergestellt werden, dass ein Bediener der Getränkezubereitungsmaschine nicht in Kontakt mit dem aggressiven Reinigungsmittel kommt, da dieses in der Kartusche abgeschlossen bevorratet ist. Die Auflösung des sich in der Kartusche befindlichen Reinigungsmittels in der Flüssigkeit, welche der Kartusche zugeführt wird, ist dabei jedoch häufig unvollständig, weil das durch die Kartusche geleitete Wasser das feste Reinigungsmittel nicht vollständig in eine flüssige Reinigungsmittellösung umwandeln kann. Dies erschwert eine genaue Dosierung einer für die Durchführung eines Reinigungszyklus erforderlichen Menge des Reinigungsmittels bzw. einer hierfür erforderlichen Konzentration des Reinigungsmittels in einer Reinigungsmittellösung, die durch das Auflösen des Reinigungsmittels in der Flüssigkeit erzeugt wird. Darüber hinaus weisen Reinigungsvorrichtungen mit Reinigungsmittelkartuschen Nachteile unter dem Gesichtspunkt der Abfallvermeidung auf, denn die entleerten Kartuschen, welche regelmäßig ein Kunststoffgehäuse aufweisen, sind für den Einmalgebrauch vorgesehen und müssen entsorgt werden.

Die US 5 551 988 offenbart ein Verfahren zur Reinigung einer Brühvorrichtung, insbesondere einer Kaffeemaschine, wobei für den Reinigungsvorgang Wasser von einem Wasserbehälter oder von einem externen Wasseranschluss über eine Zuführungsleitung dem Wasseranschluss eines Brühzylinders zugeführt wird und in mindestens einer Reinigungsphase Wasser vom Brühzylinder in Bereiche ausserhalb des Brühzylinders geleitet wird. In einer weiteren Reinigungsphase kann eine chemische und/oder biologische Reinigung vorgenommen werden. Zu diesem Zweck wird der Brühzylinder unter einen Trichter verschwenkt, wobei durch einen Pulverschacht ein Reinigungsmittel in Tabletten-, Pulver- oder flüssiger Form in den Brühzylinder eingeworfen wird. Danach wird der Brühzylinder wieder in eine Spülposition verschwenkt. Nachdem die Pumpe Wasser in den Brühzylinder gefördert hat, wirkt das Reinigungsmittel während einiger Zeit ein.

Die CH 709 738 A1 zeigt eine Applikationsvorrichtung für ein Entkalkungsmittel, mit der einem Getränkeautomaten, insbesondere einer Kaffeemaschine, ein Entkalkungsmittel zugeführt werden kann, wobei das flüssige Entkalkungsmittel mittels eines vorgespannten Kolbens aus einem Behälter in eine mit dem Getränkeautomaten verbundene Auslassleitung herausgedrückt wird.

Eine weitere Entkalkungsvorrichtung ist aus der US 2014/0060338 A1 bekannt, wobei die Entkalkungsvorrichtung einen Vorratsbehälter mit einem Gehäuse, das einen durch eine Wasserquelle gespeisten Wasserzulauf zu einer Vorratskammer mit einem darin aufgenommenen wasserlöslichen Entkalkungsmittel enthält, umfasst und der Vorratsbehälter eine mit der Vorratskammer flüssigkeitsleitend verbundene Bodenkammer zur Sammlung des durch das Wasser gelösten Entkalkungsmittels aufweist, in die eine Kapillarleitung zur Abführung der Lösung mündet.

Eine weitere Vorrichtung zur Reinigung einer Kaffeemaschine mit einem Wassertank, einer Heizeinrichtung, einer Brühleinheit und eines Wasserleitungssystems mit einer Förderpumpe zum Fördern von Wasser aus dem Wassertank durch das Wasserleitungssystem ist aus der DE 10 2011 054 601 A1 bekannt, wobei die Reinigungsvorrichtung eine Kammer für ein Entkalkungs- und/oder Reinigungsmittel umfasst, welche an das Wasserleitungssystem anschließbar oder zuschaltbar ist, so das Wasser aus dem Wassertank mittels der Förderpumpe der Kaffeemaschine durch die Kammer in das Wasserleitungssystem der Kaffeemaschine gefördert werden kann. Diese Reinigungsvorrichtung soll zwar eine vollständige Auflösung und Vermischung des Entkalkungs-und/oder Reinigungsmittels ermöglichen, indem das sich in der Kammer befindliche Mittel durch Einleitung und durch Transport von Wasser durch die Kammer in einer wässrigen Lösung aufgelöst wird und die wässrige Lösung aus der Kammer in das Wasserleitungssystem der Kaffeemaschine geleitet wird, um insbesondere die Brüheinheit und/oder die Heizeinrichtung mit der Reinigungsmittellösung zu reinigen. Auch bei dieser Vorrichtung ist jedoch eine genaue Dosierung der für einen Reinigungsvorgang benötigten Menge des Reinigungsmittels bzw. der Konzentration des Reinigungsmittels in der Reinigungsmittellösung schwierig.

Zur genauen Dosierung einer bestimmten Menge eines für die Durchführung eines Reinigungsvorgangs in einer Getränkezubereitungsmaschine benötigten Reinigungsmittels sind aus dem Stand der Technik Reinigungsvorrichtungen mit einer Dosiereinrichtung für das Reinigungsmittel bekannt, wobei der Dosiereinrichtung ein festes Reinigungsmittel, beispielsweise in Pulver-, Granulat-, Festkörper- oder Tablettenform zugeführt wird. Aus der EP 1 210 894 B1 ist beispielsweise eine Getränkemaschine, insbesondere eine Kaffeemaschine, mit einer Eintragseinrichtung für festes Reinigungsmittel, insbesondere in Presskörperform bekannt, in der eine selbsttätig dosierende, in sich geschlossene Dosiereinrichtung für das Reinigungsmittel vorgesehen ist. Die Dosiereinrichtung umfasst dabei einen Vorratsbehälter für das feste Reinigungsmittel und eine Dosiereinheit mit einer bewegbaren Dosierkammer, durch die eine vorbestimmte Menge des Reinigungsmittels aus dem Vorratsbehälter in einen Auslauf förderbar ist.

Ein weiteres Reinigungssystem für einen Getränkeautomaten, insbesondere eine Kaffeemaschine, ist aus der EP 2 584 946 B1 bekannt, wobei das Reinigungssystem eine Reinigungseinrichtung zur periodischen Reinigung der mit den Getränken in Kontakt tretenden Bauteilen mittels einer Reinigungsflüssigkeit enthält. Zur Herstellung der Reinigungsflüssigkeit wird in der Reinigungseinrichtung ein festes Reinigungsmittel, das insbesondere Kugel- oder Tablettenform aufweisen kann, in der Reinigungsflüssigkeit aufgelöst. Die Reinigungseinrichtung umfasst eine gesteuerte Dosierungsvorrichtung mit einer Dosierschranke, welche die Reinigungskugeln oder -Tabletten, die in einem Vorratsbehälter bevorratet sind, in einen Abgabeschacht mit einer Dosieröffnung freigibt. Zwischen dem Vorratsbehälter und dem Abgabeschacht sind dabei zwei gegenläufig angetriebene Dosierschnecken angeordnet, durch welche die Reinigungskugeln oder -Tabletten einzeln in den Abgabeschacht gefördert werden können.

Die aus dem Stand der Technik bekannten Reinigungsvorrichtungen mit einer Dosiereinrichtung zur dosierten Zufuhr eines festen Reinigungsmittels ermöglichen einerseits eine einfache und sichere Handhabung des Reinigungsmittels sowie eine genaue Dosierung der für einen Reinigungsvorgang benötigten Menge an Reinigungsmittel und eine exakt dosierte Wirkstoffkonzentration des Reinigungsmittels in einer Reinigungsflüssigkeit, die durch Auflösen des festen Reinigungsmittels erzeugt wird.

Hiervon ausgehend besteht ein Bedürfnis für eine Reinigungsvorrichtung zur Reinigung von Getränkezubereitungsmaschinen, die eine vollständige Auflösung eines Reinigungsmittels, welches beispielsweise in Pulver- oder Tablettenform mittels einer Dosiereinrichtung zugeführt wird, in einer Reinigungsmittellösung, insbesondere einer wässrigen Lösung des Reinigungsmittels, ermöglicht, um eine optimale Konzentration des Reinigungsmittels in der Reinigungsmittellösung mit einer homogenen Konzentrationsverteilung über das Volumen einer Dosis der Reinigungsmittellösung zu erzeugen. Dabei soll insbesondere eine vollständige Auflösung oder eine homogene Vermischung des Reinigungsmittels in der Reinigungsmittellösung erzielt werden. Weiterhin soll der Verbrauch an Reinigungsmittel minimiert werden. Die Reinigungsvorrichtung soll dabei vollautomatisch durch eine Steuereinrichtung der Getränkezubereitungsmaschinen steuerbar sein, um beispielsweise vorprogrammierte Reinigungszyklen vollautomatisch mit einer exakten Dosierung des für den Reinigungszyklus benötigten Menge des Reinigungsmittels und einer optimalen Konzentration des Reinigungsmittels in einer für den Reinigungszyklus benötigten Dosis einer Reinigungsmittellösung durchführen zu können.

Diese Aufgaben werden mit der Vorrichtung zur Reinigung einer Getränkezubereitungsmaschine mit den Merkmalen des Anspruchs 1 sowie mit dem Verfahren zur Reinigung einer Getränkezubereitungsmaschine mit den Merkmalen des Anspruchs 10 gelöst. Bevorzugte Ausführungsformen der Reinigungsvorrichtung und des Verfahrens sind den abhängigen Ansprüchen zu entnehmen.

Die Reinigungsvorrichtung gemäß der Erfindung umfasst eine erste Kammer zur Aufnahme eines insbesondere festen Reinigungsmittels sowie ein mit der ersten Kammer gekoppeltes Flüssigkeitsleitungssystem mit einer an einen Wasseranschluss anschließbaren Wasserleitung zur Zufuhr von Wasser und einer an die erste Kammer angeschlossene Abflussleitung, welche mit der Getränkezubereitungsmaschine verbindbar ist, wobei ein in die erste Kammer einführbarer erster Kolben vorgesehen ist.

Durch die Wasserleitung kann Wasser in die erste Kammer geleitet werden, um eine sich darin befindliche vorgegebene Menge des Reinigungsmittels in einer wässrigen Reinigungsmittellösung aufzulösen. Der in die erste Kammer einführbare erste Kolben ermöglicht dabei eine gute und homogene Durchmischung des Reinigungsmittels in der wässrigen Reinigungsmittellösung und der Kolben verschließt außerdem einen Reinigungsmittelzugang in die erste Kammer, durch den das Reinigungsmittel zugeführt wird, wenn der Kolben in die erste Kammer in einer Betriebsposition eingeführt ist. Wenn sich der erste Kolben in seiner Betriebsposition in der ersten Kammer befindet, kann Wasser über die Wasserleitung in die erste Kammer eingeleitet werden, um die sich in der Kammer befindliche Menge des Reinigungsmittels in der Reinigungsmittellösung aufzulösen. Hierfür ist der erste Kolben beweglich zwischen einer oberen Grundposition, in der der erste Kolben aus der ersten Kammer herausgezogen ist, und der unteren Betriebsposition, in der sich der erste Kolben in der ersten Kammer befindet, in der ersten Kammer angeordnet. Dadurch wird einerseits eine vollständige Auflösung und eine homogene Vermischung des Reinigungsmittels in der Reinigungsmittellösung sowie eine homogene Konzentration des Reinigungsmittels in einer vorgegebenen Dosis der Reinigungsmittellösung ermöglicht und andererseits sichergestellt, dass während des Auflösens oder Vermischens des Reinigungsmittels kein weiteres Reinigungsmittel in die Kammer gelangen kann, weil der Reinigungsmittelzugang der Kammer durch den eingeschobenen Kolben verschlossen ist.

In einer bevorzugten Ausführungsform der Reinigungsvorrichtung ist der erste Kolben Bestandteil einer Kolbeneinheit, welche den ersten Kolben, einen zweiten Kolben und eine zwischen dem ersten Kolben und dem zweiten Kolben angeordnete und die beiden Kolben verbindende Verbindungsleitung umfasst. Dabei ist der zweite Kolben bevorzugt beweglich in einer zweiten Kammer angeordnet, wobei die zweite Kammer in Strömungsrichtung des über die Wasserleitung zugeführten Wassers gesehen stromaufwärts der ersten Kammer angeordnet ist und über die Verbindungsleitung fluidleitend mit der ersten Kammer in Verbindung steht. Über die Verbindungsleitung wird eine Bewegung des zweiten Kolbens in der zweiten Kammer auf den ersten Kolben übertragen. Die Wasserleitung ist dabei bevorzugt an einem Wassereinlaufstutzen der zweiten Kammer angeschlossen. Diese Anordnung ermöglicht eine selbsttätige Bewegung des ersten und des damit über die Verbindungsleitung verbundenen zweiten Kolbens in der ersten bzw. der zweiten Kammer, wenn Wasser durch die Wasserleitung in die zweite Kammer eingeleitet wird. Durch den Druck des eingeleiteten Wassers wird der zweite Kolben in der zweiten Kammer aus einer Grundposition in eine Betriebsposition bewegt, insbesondere von oben nach unten, und der erste Kolben bewegt sich dabei ebenfalls in seine Betriebsposition, während das Wasser durch die Verbindungsleitung von der zweiten Kammer in die erste Kammer strömen kann, um die erste Kammer mit Wasser zu füllen und die sich darin befindliche Menge des Reinigungsmittels aufzulösen.

Zur Vorspannung der Kolbeneinheit umfasst diese bevorzugt ein Federelement, welches den zweiten Kolben in der zweiten Kammer in seiner Grundposition vorspannt. Bei Einleiten von Wasser in die zweite Kammer wird das Federelement durch den Wasserdruck entgegen seiner Rückstellkraft zusammengedrückt, wodurch der zweite Kolben und der erste Kolben in ihre jeweilige Betriebsposition gebracht werden. Das Federelement ist dabei zweckmäßig zwischen dem ersten Kolben und dem zweiten Kolben und insbesondere um die rohrförmige Verbindungsleitung herum angeordnet und das Federelement stützt sich bevorzugt an einer Stütze in der zweiten Kammer ab. Die Stütze ist bevorzugt in einem Endbereich der zweiten Kammer angeordnet, insbesondere an einem Boden der zweiten Kammer, wobei sich das Federelement zwischen der Stütze und einer Stirnfläche, insbesondere der unteren Stirnfläche, des zweiten Kolbens, erstreckt. Durch diese Anordnung übt das Federelement in einem unbelasteten Zustand eine Vorspannung auf den ersten und den zweiten Kolben aus, die den ersten und den zweiten Kolben jeweils in seiner Grundposition hält, wobei der erste Kolben in seiner Grundposition aus der ersten Kammer herausgezogen ist und sich der zweite Kolben in seiner Grundposition innerhalb der zweiten Kammer in einer (oberen) Grenzstellung befindet, in der der zweite Kolben an einem (oberen) Anschlag der zweiten Kammer anliegt.

Um beim Einleiten von Wasser durch die Wasserleitung eine sichere Bewegung des ersten Kolbens in seine Betriebsposition zu gewährleiten und um den ersten Kolben während der Einleitung von Wasser in dieser Betriebsposition zu halten, weist die zweite Kammer bevorzugt einen größeren Querschnitt und insbesondere einen größeren Durchmesser als die erste Kammer auf und entsprechend weist bevorzugt auch der zweite Kolben einen größeren Querschnitt und insbesondere einen größeren Durchmesser als der erste Kolben auf. Durch den größeren Querschnitt des ersten Kolbens gegenüber dem Querschnitt des zweiten Kolbens ist die Gegenkraft, die durch das in die erste Kammer eingeleitete Wasser auf den ersten Kolben, insbesondere auf dessen untere Stirnfläche ausgeübt wird, kleiner als die vom Wasserdruck auf den zweiten Kolben, insbesondere auf dessen obere Stirnfläche, ausgeübte Kraft, wodurch der erste und der zweite Kolben jeweils in ihrer Betriebsposition gehalten werden, solange Wasser über die Wasserleitung eingeleitet wird.

Bevorzugt ist in der Wasserleitung wenigstens ein Ventil, insbesondere ein Sperrventil und/oder ein Regelventil, insbesondere ein Druckregelventil, und/oder ein Druckminderer angeordnet. Die Anordnung eines Sperrventils ermöglicht ein Öffnen und Schließen der Wasserleitung und dadurch das Einleiten von Wasser in die Reinigungsvorrichtung und ein Stoppen der Wasserzufuhr. Die Anordnung eines Druckregelventils und/oder eines Druckminderers in der Wasserleitung ermöglicht die Einstellung eines vorgegebenen Wasserdrucks, der bevorzugt im Bereich von 3 bis 10 bar liegt.

Zur Abdichtung der ersten und der zweiten Kammer weist der erste Kolben und der zweite Kolben bevorzugt jeweils mindestens ein Dichtelement auf, wobei das Dichtelement des ersten Kolbens dichtend an einer Innenwand der ersten Kammer und das Dichtelement des zweiten Kolbens dichtend an einer Innenwand der zweiten Kammer anliegt.

Zur Zuführung einer vorgegebenen Menge an Reinigungsmittel weist die erste Kammer wenigstens einen Reinigungsmittelzugang auf, wobei der Reinigungsmittelzugang zweckmäßig in einem oberen Bereich oder an einem oberen Ende der ersten Kammer angeordnet ist. Der oder jeder Reinigungsmittelzugang umfasst dabei eine Öffnung in einer Wandung der ersten Kammer, durch welche das Reinigungsmittel, das bspw. in Form von Tabletten oder Kugeln oder auch als Granulat, Pulver oder Flüssigkeit vorliegt, in die erste Kammer eingebracht werden kann.

Erfindungsgemäß befindet sich der erste Kolben in seiner Betriebsposition soweit in der ersten Kammer, dass ein Zugang von der Öffnung des Reinigungsmittelzugangs in die erste Kammer versperrt ist. Dies stellt sicher, dass während des Einleitens von Wasser in die erste Kammer kein weiteres Reinigungsmittel in die erste Kammer eingebracht werden kann, wodurch eine exakte Dosierung der Reinigungsmittelmenge in der ersten Kammer und eine genaue Konzentrierung des Reinigungsmittels in der Reinigungsmittellösung sichergestellt wird.

Erfindungsgemäß ist der Reinigungsmittelzugang mit einem Reinigungsmittelspender oder einer Dosiervorrichtung gekoppelt, um eine vorgegebene Menge des Reinigungsmittels durch den Reinigungsmittelzugang in die erste Kammer zu dosieren. Bei dem Reinigungsmittelspender oder der Dosiervorrichtung handelt es sich bevorzugt um einen Spender, mit dem Kugeln oder Tabletten des Reinigungsmittels, welche in einem Vorratsbehälter bevorratet sind, dem Reinigungsmittelzugang einzeln zugeführt werden können. Eine solche Dosiervorrichtung ist bspw. aus der EP 2 584 946 B1 bekannt. Dies gewährleistet eine exakte Dosierung der über den Reinigungsmittelzugang in die erste Kammer eingebrachten Menge des Reinigungsmittels. Dabei ist es bspw. möglich, eine vorgebbare Anzahl an Reinigungsmittel-Kugeln oder -Tabletten in die erste Kammer einzubringen, so dass über die Anzahl der Kugeln oder Tabletten verschiedene Konzentrationen des Reinigungsmittels in einer durch das verfügbare Volumen der ersten Kammer vorgegeben Dosis der Reinigungsmittellösung erzeugt werden können.

Zur Ausleitung der in der ersten Kammer erzeugten Reinigungsmittellösung in eine mit dem Leitungssystem der Getränkezubereitungsmaschine verbundene Abflussleitung umfasst die Reinigungsvorrichtung bevorzugt eine Druckgasleitung, welche mit einer Druckgasquelle koppelbar ist. Bevorzugt ist hierfür die zweite Kammer mit der Druckgasleitung verbunden, wobei die Druckgasleitung zweckmäßig in einem oberen Abschnitt oder an einer Oberseite in die zweite Kammer mündet. Die Druckgasleitung kann alternativ auch in die Wasserleitung münden. Über die Druckgasleitung kann nach Beendigung der Wasserzufuhr und bevorzugt nach einem vollständigen Auflösen des Reinigungsmittels in der Reinigungsmittellösung ein komprimiertes Gas (Druckgas), bspw. Druckluft, in die Reinigungsvorrichtung und insbesondere in die zweite Kammer und über die Verbindungsleitung in die erste Kammer, eingeleitet werden, um die in der ersten Kammer erzeugte Reinigungsmittellösung in die an die erste Kammer angeschlossene Abflussleitung zu drücken.

In der Abflussleitung ist bevorzugt ein Sperrventil und/oder ein Regelventil angeordnet, um die Abflussleitung öffnen und schließen oder einen bestimmten Strömungsquerschnitt in der Abflussleitung einstellen zu können. Über ein in der Abflussleitung angeordnetes Regelventil lässt sich der Volumenstrom der abgeführten Reinigungsmittellösung und/oder der Druck in der ersten Kammer einstellen.

Die Reinigungsvorrichtung kann dabei - je nach Stellung des Sperr- oder Regeventils in der Abflussleitung - in einem kontinuierlichen Betrieb oder in einem Batchbetrieb betrieben werden. Beim kontinuierlichen Betrieb ist das Sperr- oder Regeventil in der Abflussleitung zumindest teilweise geöffnet, während kontinuierlich Wasser durch die erste Kammer geleitet wird, wodurch das Reinigungsmittel in der ersten Kammer in einer Reinigungsmittellösung aufgelöst oder vermischt und die Reinigungsmittellösung direkt und kontinuierlich durch die geöffnete Abflussleitung zur Getränkezubereitungsmaschine abgeführt wird. Dabei ist die Verwendung eines Regelventils in der Abflussleitung vorteilhaft, weil durch die Stellung des Regeventils der Strömungsquerschnitt in der Abflussleitung eingestellt werden kann. Durch eine Veränderung des Strömungsquerschnitts in der Abflussleitung kann der Volumenstrom der Reinigungsmittellösung sowie die Konzentration des Reinigungsmittels in der Reinigungsmittellösung angepasst werden. Eine in der Verbindungsleitung angeordnete Düse sorgt dabei dafür, dass die Kolbeneinheit und insbesondere der erste Kolben in einer vorgegebenen Betriebsposition gehalten wird, unabhängig von der Stellung des Regelventils in der Abflussleitung.

Beim Batchbetrieb ist das Sperr- oder Regeventil in der Abflussleitung geschlossen, während Wasser mit einem vorgegebenen Druck über die Wasserleitung in die erste Kammer geleitet wird. Zur Einstellung eines bestimmten Wasserdrucks ist dabei bevorzugt ein Druckregelventil und/oder ein Druckminderer in der Wasserleitung angeordnet. Über den Wasserdruck kann in dem Batchbetrieb der Reinigungsvorrichtung bei geschlossener Abflussleitung in der Betriebsposition die genaue Stellung des ersten Kolbens in der ersten Kammer eingestellt werden. Die Stellung des ersten Kolbens in der Betriebsposition bestimmt dabei das Volumen in der ersten Kammer, in dem die Reinigungsmittellösung durch Auflösen oder Vermischen des Reinigungsmittels erzeugt wird. Die Stellung des ersten Kolbens in der Betriebsposition legt daher das Volumen einer Dosis der Reinigungsmittellösung fest, die für die Durchführung eines Reinigungsvorgangs von der Reinigungsvorrichtung zur Verfügung gestellt wird. Nach Beendigung des Auflösens oder Vermischens des Reinigungsmittels in der Reinigungsmittellösung wird die Wasserzufuhr durch Verschließen des Sperr- oder Regeventil in der Abflussleitung gestoppt und die sich in der ersten Kammer befindliche Dosis der Reinigungsmittellösung wird bei geöffnetem Ventil in der Abflussleitung durch Einleitung eines komprimierten Gases, bspw. Druckluft, in die erste Kammer zur Getränkezubereitungsmaschine geleitet. Dabei kann der Volumenstrom der Reinigungsmittellösung, die der Getränkezubereitungsmaschine zugeführt wird, durch die Stellung eines in der Abflussleitung angeordneten Regelventils eingestellt werden.

Zur Steuerung eines Reinigungsvorgangs zur Reinigung der Getränkezubereitungsmaschine ist die Reinigungsvorrichtung bevorzugt mit einer Steuereinrichtung der Getränkezubereitungsmaschine gekoppelt, welche zu vorgegebenen Zeiten und/oder Ereignissen, bspw. dem Ein- oder Ausschalten der Getränkezubereitungsmaschine oder nach einer vorgegebenen Anzahl von Getränkebezügen, automatisch einen Reinigungsvorgang einleitet. Dabei können auch verschiedene Reinigungsvorgänge in der Steuereinrichtung programmiert sein oder werden, wobei bevorzugt jedem Reinigungsvorgang eine bestimmte Dosierung und/oder Konzentration der Reinigungsmittellösung zugeordnet ist. Bevorzugt ist die Steuereinrichtung programmierbar, so dass ein Bediener individuell nach seinen Bedürfnissen oder in Abhängigkeit der mit der Getränkezubereitungsmaschine erzeugten Getränke bestimmte Reinigungsvorgänge und Reinigungszyklen einstellen kann.

Zur Ansteuerung der Reinigungsvorrichtung sind die in der Wasserleitung und in der Abflussleitung angeordneten Ventile mit der Steuereinrichtung gekoppelt. Dadurch können die Wasserleitung und die Abflussleitung geöffnet und geschlossen werden oder es kann durch die Steuereinrichtung ein bestimmter Wasserdruck in der Wasserleitung und/oder ein bestimmter Volumenstrom der Reinigungsmittellösung beim Zuführen zur Getränkezubereitungsmaschine eingestellt werden. Weiterhin ist die Steuereinrichtung bevorzugt auch mit der Druckgasquelle und/oder einem Ventil in der Druckgasleitung gekoppelt, um die Zufuhr des Druckgases zu steuern. Wenn der Reinigungsmittelzugang mit einem Spender oder einer Dosiervorrichtung gekoppelt ist, wird zweckmäßig auch der Spender oder die Dosiervorrichtung von der Steuereinrichtung angesteuert.

Eine besonders schnelle und vollständige Auflösung von festem Reinigungsmittel in der Reinigungsmittellösung lässt sich erzielen, wenn der ersten Kammer warmes oder heißes Wasser zugeführt wird, in dem sich das feste Reinigungsmittel auflöst. Daher ist die Wasserleitung bevorzugt mit einem Wasseranschluss gekoppelt, der heißes Wasser, das insbesondere eine Temperatur zwischen 40°C und 100°C aufweist, bereitstellt. Der Wasseranschluss ist dabei zweckmäßig mit einem Boiler oder einem Durchlauferhitzer der Getränkezubereitungsmaschine gekoppelt, welcher heißes Wasser für die Getränkezubereitung erzeugt. In einer bevorzugten Ausführungsform ist dabei die zweite Kammer über die Wasserleitung mit dem Boiler oder dem Durchlauferhitzer, der heißes Wasser mit einer Temperatur von mindestens 60°C bereitstellt, verbunden.

In dem Verfahren zur Reinigung einer Getränkezubereitungsmaschine mit einer Reinigungsvorrichtung, bei der es sich insbesondere um eine Reinigungsvorrichtung nach der Erfindung handelt und welche zumindest eine erste Kammer umfasst, wird in die erste Kammer eine bestimmte Menge eines Reinigungsmittels dosiert und anschließend wird über eine an einen Wasseranschluss anschließbare Wasserleitung Wasser in die erste Kammer geleitet, wodurch sich das Reinigungsmittel in einer Reinigungsmittellösung auflöst, und danach oder während der Wasserzufuhr wird die Reinigungsmittellösung über eine an die erste Kammer angeschlossene Abflussleitung der Getränkezubereitungsmaschine zugeführt. Dabei ist vorgesehen, dass das in die erste Kammer geleitete Wasser eine Temperatur von mindestens 40°C, bevorzugt von mehr als 60°C und insbesondere zwischen 60°C und 100°C aufweist. Weiterhin weist das in die erste Kammer geleitete Wasser bevorzugt einen Druck von mindestens 3 bar, bevorzugt zwischen 3 bar und 10 bar und insbesondere zwischen 4 bar und 6 bar auf.

In einer Ausführungsform der Reinigungsvorrichtung ist die erste Kammer bevorzugt fluidisch mit einer zweiten Kammer gekoppelt, wobei die Wasserleitung, welche das warme Wasser führt, mit der zweiten Kammer verbunden ist, um das warme Wasser in die zweite Kammer und in die erste Kammer zu leiten. Dabei wird das warme Wasser nach einer Dosierung einer bestimmten Menge des Reinigungsmittels in die erste Kammer eingeleitet. Dabei wird während der Wasserzufuhr der erste Kolben in seine Betriebsposition in die erste Kammer eingeführt und gehalten. Das warme Wasser strömt dabei nach dem Einführen des ersten Kolbens durch die Verbindungsleitung, welche den ersten und den zweiten Kolben verbindet, in die erste Kammer. Dabei erstreckt sich die Verbindungsleitung, die insbesondere rohrförmig ausgebildet ist, bevorzugt durch den ersten und den zweiten Kolben, um eine fluidische Verbindung zwischen der ersten Kammer und der zweiten Kammer herzustellen.

Dabei wird bei einer Zufuhr von Wasser durch die Wasserleitung durch den vom eingeleiteten Wasser erzeugten Druck der erste Kolben in die erste Kammer gedrückt, wobei der vom eingeleiteten Wasser erzeugte Druck zunächst auf den zweiten Kolben, insbesondere dessen oberer Stirnfläche, einwirkt und von diesem auf den ersten Kolben übertragen wird. Dabei ist der Querschnitt des zweiten Kolbens, auf den der Druck des Wassers einwirkt, bevorzugt größer als der Querschnitt des ersten Kolbens, auf den ein Gegendruck einwirkt, der von dem Wasser erzeugt wird, das über die Verbindungsleitung in die erste Kammer strömt.

Nach der Erzeugung der Reinigungsmittellösung durch Auflösen des Reinigungsmittels in dem warmen Wasser, das der ersten Kammer zugeführt worden ist, wird zunächst die Zufuhr von Wasser gestoppt und danach die Reinigungsmittellösung durch Einleiten eines Druckgases, insbesondere von Druckluft, in die erste Kammer von der ersten Kammer in die Abflussleitung gedrückt und dadurch der Getränkezubereitungsmaschine zugeführt. In einem kontinuierlichen Betrieb kann auch bereits während der Wasserzufuhr die in der ersten Kammer erzeugte Reinigungsmittellösung in die Abflussleitung geleitet werden.

Sobald die Reinigungsmittellösung vollständig in die Abflussleitung überführt worden ist, wird das Einleiten des Druckgases in die erste Kammer gestoppt, wodurch sich der zweite Kolben selbsttätig aufgrund der Rückstellkraft des Federelements aus der ersten Kammer in seine Grundposition herausbewegt.

Wenn sich der erste Kolben in seiner Grundposition außerhalb der ersten Kammer befindet, ist der Reinigungsmittelzugang, durch den das Reinigungsmittel in die erste Kammer eingebracht wird, freigegeben, und der Reinigungsmittelzugang ist gesperrt, wenn sich der erste Kolben in einer Betriebsposition innerhalb der ersten Kammer befindet. Dies verhindert, dass während der Erzeugung der Reinigungsmittellösung noch Reinigungsmittel in die erste Kammer gelangen kann.

Die Reinigungsvorrichtung wird bevorzugt automatisch durch eine Steuereinrichtung gesteuert, welche insbesondere ein Ventil in der Wasserleitung und/oder einen daran angeschlossenen Wasseranschluss, einen Spender oder eine Dosiervorrichtung zur Ausgabe der bestimmten Menge des Reinigungsmittels, eine Druckgasquelle zur Einleitung eines Druckgases in die erste Kammer und ein Ventil in der Abflussleitung ansteuert, um die oben beschriebenen Schritte zur Herstellung einer Reinigungsmittellösung und zur Durchführung eines Reinigungsvorgangs auszuführen.

Dabei ist die Steuereinrichtung bevorzugt so eingerichtet oder programmierbar, dass nach vorgegebenen Ereignissen, die insbesondere von einem Betrieb der Getränkezubereitungseinrichtung abhängig sind, und/oder nach oder zu vorgegebenen Zeiten automatisiert ein Reinigungsvorgang durch die Reinigungsvorrichtung ausgeführt wird, wobei in dem Reinigungsvorgang insbesondere die Bauteile der Getränkezubereitungseinrichtung mit der Reinigungsmittellösung gereinigt werden, welche mit Flüssigkeiten zur Herstellung eines Getränks und/oder mit einem in der Getränkezubereitungseinrichtung hergestellten Getränk in Kontakt kommen.

Gegenstand der Erfindung ist weiterhin eine Getränkezubereitungsmaschine, insbesondere eine Kaffeemaschine und/oder eine Maschine zur Herstellung eines Pulvergetränks, in der bevorzugt über ein integriertes Milchmodul auch heiße Milch sowie warmer oder kalter Milchschaum zubereitet werden kann, wobei die Getränkezubereitungsmaschine mit einer erfindungsgemäßen Reinigungsvorrichtung ausgestattet ist. Bevorzugt ist dabei eine erfindungsgemäße Reinigungsvorrichtung in die Getränkezubereitungsmaschine integriert oder als austauschbares Reinigungsmodul einführbar. Dabei umfasst die Getränkezubereitungsmaschine insbesondere eine Brüheinrichtung zum Brühen eines Heißgetränks, bspw. aus gemahlenem Kaffeepulver, Teeblättern oder Kakaopulver, und/oder ein Milchmodul zum Erwärmen und/oder Aufschäumen von Milch sowie ein Leitungssystem zur Zufuhr von Wasser in die Brüheinrichtung und zur Ableitung des aufgebrühten Getränks und/oder der erwärmten oder aufgeschäumten Milch zu einem Auslauf, wobei die Reinigungsvorrichtung zweckmäßig mit der Brüheinrichtung und/oder mit dem Milchmodul über das Leitungssystem der Getränkezubereitungsmaschine gekoppelt ist, um die Brüheinrichtung und/oder das Milchmodul sowie die Leitungen des Leitungssystems, in denen die Getränke und Getränkezutaten transportiert werden, mit der in der Reinigungsvorrichtung erzeugten Reinigungsmittellösung während eines Reinigungsvorgangs reinigen zu können.

Diese und weitere Vorteile sowie Merkmale der Erfindung ergeben sich aus dem nachfolgend unter Bezugnahme auf die Zeichnungen beschriebenen Ausführungsbeispiel. Dabei zeigen:
- **Fig. 1:**: eine schematische Darstellung einer ersten Ausführungsform einer erfindungsgemäßen Reinigungsvorrichtung in einer Grundposition;

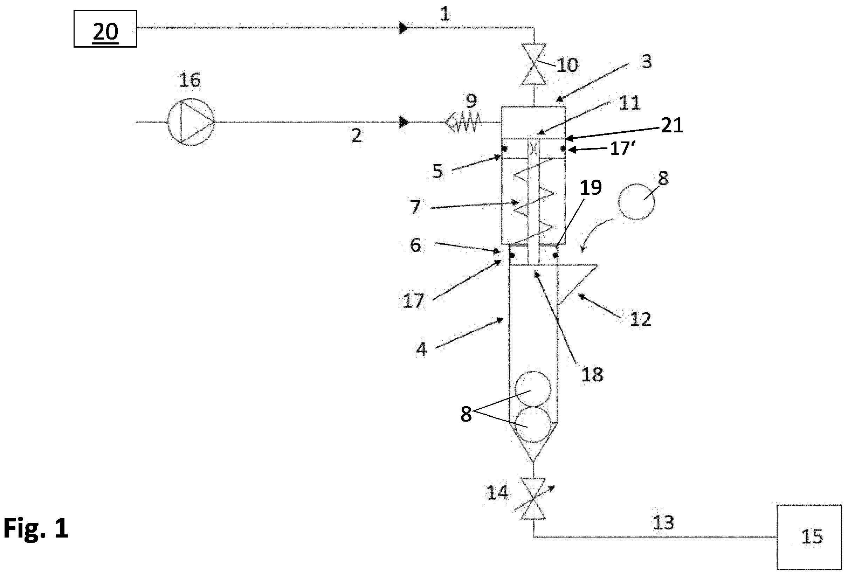

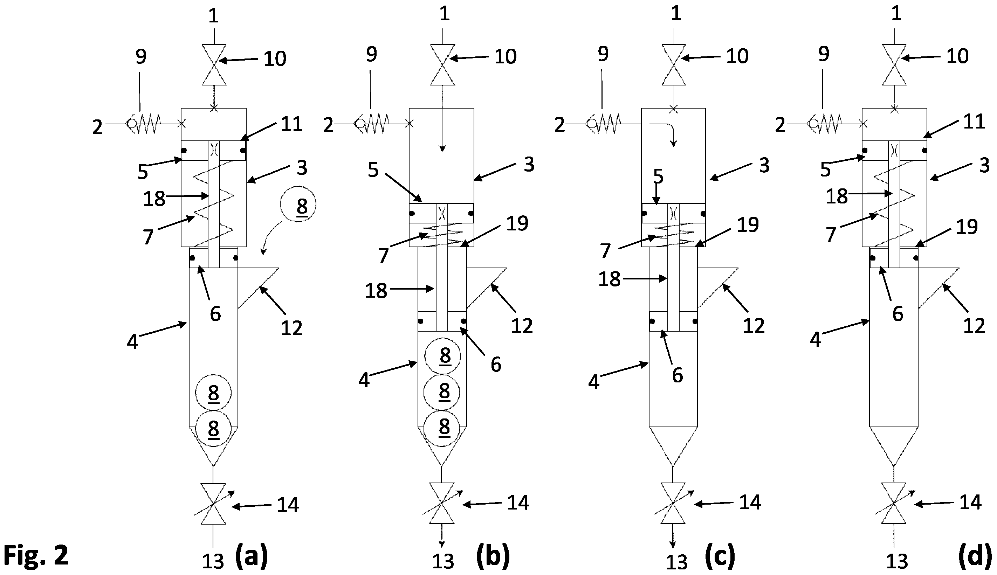

- **Fig. 2:**: schematische Darstellungen der Reinigungsvorrichtung von Figur 1 in verschiedenen Positionen während der Einleitung und Durchführung eines Reinigungszyklus, wobei Figur 2(a) die Reinigungsvorrichtung in der Grundposition zeigt, in der ein festes Reinigungsmittel zugeführt wird, Figur 2(b) die Reinigungsvorrichtung in einer Betriebsposition zeigt, in der Wasser zugeführt und das Reinigungsmittel darin zu einer Reinigungsmittelösung aufgelöst wird, Figur 2(c) die Reinigungsvorrichtung in der Betriebsposition zeigt, in der die Reinigungsmittelösung abgeführt wird und Figur 2(d) die Reinigungsvorrichtung wieder in der Grundposition zeigt, in der diese bereit zur Aufnahme des festen Reinigungsmittels ist;
- **Fig. 3:**: eine schematische Darstellung einer zweiten Ausführungsform einer erfindungsgemäßen Reinigungsvorrichtung in einer Grundposition.

Die in Figur 1 gezeigte Reinigungsvorrichtung umfasst eine erste Kammer 4 mit einem darin beweglich angeordneten ersten Kolben 6 sowie eine zweite Kammer 3 mit einem beweglich darin angeordneten zweite Kolben 5. Die erste Kammer 4 und die zweite Kammer 3 sind dabei hohlzylindrisch ausgebildet und weisen jeweils eine zylindrische Wandung auf. Die erste Kammer 4 erstreckt sich dabei in vertikaler Richtung von einem offenen oberen Ende zu einem unteren Ende, welches trichterförmig ausgebildet ist und in eine mit der ersten Kammer 4 verbundene Abfuhrleitung 13 mündet. Der erste Kolben 6 kann durch das oben offene Ende in die erste Kammer 4 eingeführt werden. Die zweite Kammer 3 ist oberhalb der ersten Kammer 4 angeordnet und erstreckt sich ebenfalls zwischen einem oberen Ende und einem unteren Ende, wobei das untere Ende einen Boden mit einer zentralen Öffnung aufweist. Am oberen Ende der zweiten Kammer 3 ist ein Wassereinlaufstutzen angeordnet, an dem eine Wasserleitung 1 angeschlossen ist. Die Wasserleitung 1 ist Bestandteil eines Flüssigkeitsleitungssystems der Reinigungsvorrichtung, welches die Wasserleitung 1 und die Abflussleitung 13 umfasst. Die Wasserleitung 1 ist an einem Wasseranschluss 20 angeschlossen, der insbesondere erhitztes Wasser, bevorzugt mit einer Temperatur von mindestens 40 °C und insbesondere im Bereich zwischen 60 °C und 100 °C, bereitstellt. In der Wasserleitung 1 ist ein Sperrventil 10 angeordnet, welches zum Öffnen und Schließen der Wasserleitung 1 dient. Anstelle eines Sperrventils oder ergänzend dazu kann auch ein Regelventil und/oder ein Druckminderer in der Wasserleitung 1 angeordnet sein.

Im Bereich des oberen Endes der zweiten Kammer 3 ist ein Anschlag 21 angeordnet, der beispielsweise durch einen von der Wandung der zweiten Kammer 3 in das Kammerinnere ragenden Ringflansch gebildet sein kann. Der in der zweiten Kammer 3 beweglich angeordnete zweite Kolben 5 kann sich in der zweiten Kammer 3 zwischen einer Grundposition a und einer Betriebsposition b bewegen, wobei eine Oberseite des zweiten Kolbens 5 in der in Figur 1 gezeigten Grundposition a am Anschlag 21 anliegt und eine Unterseite des zweiten Kolbens 5 in der in Figur 2b gezeigten Betriebsposition b auf dem Boden der zweiten Kammer 3 aufliegt oder sich zumindest nahe des Bodens befindet.

Wie aus Figur 1 ersichtlich, weist die zweite Kammer 3 einen größeren Querschnitt und insbesondere einen größeren Durchmesser als die erste Kammer 4 auf. Entsprechend weist auch der zweite Kolben 5 einen größeren Querschnitt und insbesondere einen größeren Durchmesser als der erste Kolben 6 auf.

Der erste Kolben 6 und der zweite Kolben 5 sind jeweils zylinder- oder scheibenförmig ausgebildet und über eine Verbindungsleitung 18 miteinander verbunden, wobei die Verbindungsleitung 18 sich sowohl durch den ersten Kolben 6 als auch durch den zweiten Kolben 5 erstreckt und durch die zentrale Öffnung im Boden der zweiten Kammer 3 verläuft. Die Verbindungsleitung 18 stellt dadurch eine Fluidverbindung zwischen der ersten Kammer 4 und der zweiten Kammer 3 her. In der Verbindungsleitung 18 ist bevorzugt eine Düse 11 angeordnet.

In der zweiten Kammer 3 ist ein Federelement 7 angeordnet, beispielsweise eine Spiralfeder, welche sich zwischen der Unterseite des zweiten Kolbens 5 und dem Boden der zweiten Kammer 3 erstreckt. Das Federelement 7 ist dabei insbesondere um die Verbindungsleitung 18 herum angeordnet, wie aus Figur 1 ersichtlich. Der Boden der zweiten Kammer bildet dabei eine Stütze 19, an der sich das Federelement 7 abstützt. Durch das Federelement 7 wird der zweite Kolben 5 in der zweiten Kammer 3 in seiner (oberen) Grundposition a vorgespannt. Entsprechend befindet sich auch der über die Verbindungsleitung 18 mit dem zweiten Kolben 5 verbundene erste Kolben 6 in einer (oberen) Grundposition a, in welcher der erste Kolben 6 aus der ersten Kammer 4 herausgezogen ist.

Der erste Kolben 6 und der zweite Kolben 5 weisen an ihrem Außenumfang jeweils mindestens einen umlaufenden Dichtring 17, 17' auf, wobei der Dichtring 17 des ersten Kolbens 6 an der Innenseite der Wandung der ersten Kammer 4 und der Dichtring 17' des zweiten Kolbens 5 an der der Innenseite der Wandung der zweiten Kammer 3 anliegt, wenn der zweite Kolben 5 in der zweiten Kammer 3 von seiner (oberen) Grundposition a in seine (untere) Betriebsposition b bewegt wird und sich der erste Kolben 6 dabei gleichzeitig in die erste Kammer 4 hineinbewegt.

Der erste Kolben 6 und der zweite Kolben 5 sowie die Verbindungsleitung 18 und das Federelement 7 bilden eine Kolbeneinheit, die durch das Federelement 7 in einer Grundposition a vorgespannt ist und durch Einleiten einer externen Kraft von der Grundposition a in eine Betriebsposition b bewegt werden kann.

Im Bereich des oberen Endes der ersten Kammer 4 ist ein Reinigungsmittelzugang 12 angeordnet. Der Reinigungsmittelzugang 12 umfasst dabei eine hier nicht zeichnerisch dargestellte seitliche Öffnung in der Wandung der ersten Kammer 4, durch welche ein festes Reinigungsmittel 8, beispielsweise in Tabletten- oder Kugelform, in die erste Kammer 4 eingeführt werden kann. Um das feste Reinigungsmittel 8 in einer vorgegebenen Menge in die erste Kammer 4 zu dosieren, ist der Reinigungsmittelzugang 12 mit einem Reinigungsmittelspender oder einer Dosiervorrichtung verbunden, welche das feste Reinigungsmittel 8 durch den Reinigungsmittelzugang 12 in die erste Kammer 4 dosiert. Bevorzugt liegt das feste Reinigungsmittel 8 in Form von Tabletten oder Kugeln vor, welche einzelnen mittels des Reinigungsmittelspenders oder der Dosiervorrichtung in die erste Kammer 4 dosiert werden. Dabei können auch mehrere Tabletten oder Kugeln des festen Reinigungsmittels 8 über den Reinigungsmittelzugang 12 in die erste Kammer 4 eingebracht werden, wie in Figur 1 durch die beiden Reinigungsmittelkugeln 8 angedeutet, die sich am unteren, trichterförmig ausgebildeten Ende der erste Kammer 4 befinden.

Im Bereich des oberen Endes mündet eine Druckgasleitung 2 in die zweite Kammer 3. Die Druckgasleitung 2 enthält dabei ein Rückschlagventil 9 und ist stromaufwärts des Rückschlagventils 9 mit einer Druckgasquelle 16 verbunden, welche ein komprimiertes Gas, beispielsweise Druckluft, bereitstellt. Anstelle von Druckluft können auch andere lebensmittelverträgliche Gase durch die Druckgasquelle 16 unter Druck bereitgestellt werden. Hierfür kommen anstelle von Druckluft beispielsweise auch komprimiertes Stickstoffgas oder komprimiertes Kohlendioxid in Betracht. Die Druckgasquelle 16 kann beispielsweise durch einen Kompressor gebildet sein, der Umgebungsluft ansaugt und auf einen vorgegebenen Druck komprimiert.

Die am unteren Ende der zweiten Kammer 4 angeschlossene Abflussleitung 13 ist mit einer Getränkezubereitungsmaschine 15 gekoppelt und dabei insbesondere mit einem Fluidleitungssystem der Getränkezubereitungsmaschine 15 verbunden, um eine wässrige Reinigungsmittellösung, die in der Reinigungsvorrichtung erzeugt wird, in das Fluidleitungssystem der Getränkezubereitungsmaschine 15 und insbesondere in die Bauteile der Getränkezubereitungsmaschine 15 zu leiten, welche mit den darin zubereiteten Getränken und / oder den dafür verwendeten Getränkezutaten in Berührung kommen. Zum Öffnen und Schließen der Abflussleitung 13 ist zumindest ein Ventil in der Abflussleitung 13 angeordnet. Bevorzugt enthält die Abflussleitung 13 ein Regelventil 14, welches einen einstellbaren Strömungsquerschnitt aufweist.

Die in Figur 1 gezeigte Reinigungsvorrichtung ist zweckmäßig in einem Gehäuse der Getränkezubereitungsmaschine 15 angeordnet. Bevorzugt ist die Reinigungsvorrichtung dabei als Modul austauschbar in dem Gehäuse der Getränkezubereitungsmaschine 15 eingesetzt. Der Wasseranschluss 20 und die Druckgasquelle 16 sind dabei bevorzugt Bestandteile der Getränkezubereitungsmaschine 15, welche einerseits bei der Herstellung von Getränken in der Getränkezubereitungsmaschine zur Bereitstellung von heißem Wasser und Druckgas eingesetzt werden können und andererseits die Reinigungsvorrichtung über die Wasserleitung 1 mit warmem Wasser und über die Druckgasleitung 2 mit einem Druckgas versorgen. Der Wasseranschluss 20 kann dabei insbesondere durch einen Boiler oder einen Durchlauferhitzer der Getränkezubereitungsmaschine 15 gebildet sein.

Zur Steuerung der Reinigungsvorrichtung ist eine Steuereinrichtung vorgesehen, welche insbesondere die Ventile 10 und 14 in der Wasserleitung 1 und der Abflussleitung 13 sowie die Zuführung eines Druckgases von der Druckgasquelle 16 durch die Druckgasleitung 2 und die Einführung von festem Reinigungsmittel 8 durch den Reinigungsmittelzugang 12 in die erste Kammer 4 steuert. Die Steuereinrichtung kann dabei zweckmäßig Bestandteil der Steuereinrichtung der Getränkezubereitungsmaschine 15 sein, welche so eingerichtet ist, dass nach oder zu bestimmten Zeiten oder Ereignissen, die insbesondere von der Herstellung von Getränken in der Getränkezubereitungsmaschine 15 abhängen, ein Reinigungsvorgang durch die Reinigungsvorrichtung eingeleitet wird.

In Figur 2 sind einzelne Phasen eines Reinigungsvorgangs, der mit der Reinigungsvorrichtung von Figur 1 ausgeführt werden kann, durch verschiedene Positionen der Reinigungsvorrichtung dargestellt, wobei die in Figur 2 dargestellten Phasen in dem Reinigungsvorgang nacheinander ausgeführt werden, um in einem kontinuierlichen Betrieb oder in einem Batchbetrieb eine in der Reinigungsvorrichtung erzeugte Reinigungsmittellösung zu einer Getränkezubereitungsmaschine zu leiten.

In Figur 2a ist die Reinigungsvorrichtung in ihrer Grundposition a gezeigt, welche der Darstellung von Figur 1 entspricht. Zur Einleitung eines Reinigungsvorgangs wird bei abgestellter Druckgasquelle 16 oder geschlossener Druckgasleitung 2 und geschlossenen Ventilen 10 und 14 zunächst durch den Reinigungsmittelzugang 12 eine vorgegebene Menge an Reinigungsmittel 8, bspw. eine bestimmte Anzahl an Reinigungsmitteltabletten oder - kugeln, in die erste Kammer 4 gegeben. Danach wird, wie in Figur 2b gezeigt, das Ventil 10 in der Wasserleitung 1 geöffnet. Weiterhin wird das Regelventil 14 in der Abflussleitung 13 zumindest teilweise geöffnet und insbesondere auf einen vorgegebenen Strömungsquerschnitt eingestellt. Dadurch strömt bevorzugt warmes Wasser, bspw. mit einer Temperatur von 40 °C bis 80°C, und mit einem vorgegebenen Druck, der bevorzugt mehr als 3 bar und insbesondere zwischen 4 bar und 10 bar beträgt und speziell vom Wasserdruck abhängt, der von der öffentlichen Wasserversorgung bereitgestellt wird, von der Wasserleitung 1 in den oberen Bereich der zweiten Kammer 3. Der Wasserdruck kann dabei ggf. durch ein Druckregelventil oder einen Druckminderer in der Wasserleitung 1 auf einen bestimmten Wert eingestellt werden. Durch den auf die obere Stirnfläche des zweiten Kolbens 5 einwirkenden Drucks des einströmenden Wassers wird der zweite Kolben 5 in der zweiten Kammer 3 aus seiner in Figur 2a gezeigten Grundposition a in die in Figur 2b gezeigte Betriebsposition b bewegt, in welcher sich der zweite Kolben 5 in der zweiten Kammer 3 in der Nähe des Bodens befindet. Da der zweite Kolben 5 über die Verbindungsleitung 18 mit dem ersten Kolben 6 gekoppelt ist, bewegt sich dabei auch der erste Kolben 6 von seiner in Figur 2a gezeigten Grundposition a, in welcher der erste Kolben 6 aus der ersten Kammer 4 herausgezogen ist, in die in Figur 2b gezeigte Betriebsposition b, in welcher sich der erste Kolben 6 innerhalb der ersten Kammer 4 auf einer bestimmten Höhe befindet. Der erste Kolben 6 ist dabei oberhalb der sich in der ersten Kammer 4 befindlichen Kugeln des Reinigungsmittels 8 angeordnet, wie in Figur 2b gezeigt. Durch die Bewegung des erste Kolbens 6 in seine in Figur 2b gezeigte Betriebsposition b wird der Reinigungsmittelzugang 12 und insbesondere die Öffnung in der Wandung der ersten Kammer 4 geschlossen, so dass kein Reinigungsmittel mehr in einen Bereich unterhalb des ersten Kolbens 6 in die erste Kammer 4 gelangen kann.

Das über die Wasserleitung 1 in die zweite Kammer 3 strömende Wasser fließt dabei durch die Düse 11 in der Verbindungsleitung 18 in die erste Kammer 4, welche über die Verbindungsleitung 18 fluidleitend mit der zweiten Kammer 3 verbunden ist. Aufgrund des größeren Querschnitts des ersten Kolbens 6 gegenüber dem Querschnitt des zweiten Kolbens 5 ist die Gegenkraft, die durch das in die erste Kammer 4 eingeleitete Wasser auf den ersten Kolben 6 ausgeübt wird, kleiner als die vom Wasserdruck auf den zweiten Kolben 5 ausgeübte Kraft, wodurch der erste Kolben 6 und der zweite Kolben 5 jeweils in ihrer Betriebsposition b gehalten werden, solange Wasser über die Wasserleitung 1 eingeleitet wird. Die Düse 11 stellt dabei stromaufwärts der Düse 11 einen ausreichend hohen Druck sicher, um die Kolbeneinheit in ihrer Betriebsposition b zu halten.

Durch das Einströmen von Wasser in die erste Kammer 4 im Bereich unterhalb des erste Kolben 6 werden die sich in der ersten Kammer 4 befindlichen Kugeln des Reinigungsmittels 8 zu einer wässrigen Reinigungsmittellösung aufgelöst. Die Konzentration des Reinigungsmittels 8 in der Reinigungsmittellösung wird dabei durch die Menge des Reinigungsmittels in der ersten Kammer 4 und dem Volumenstrom des durchströmenden Wassers bestimmt, welcher von dem eingestellten Strömungsquerschnitt in der Abflussleitung 13 bestimmt wird.

Durch den verschlossenen Reinigungsmittelzugang 12 ist dabei sichergestellt, dass während des Auflösens des Reinigungsmittels 8 zu der Reinigungsmittellösung kein weiteres Reinigungsmittel in die erste Kammer 4 zugegeben werden kann.

Somit stellt sich bei einem vorgegebenen Strömungsquerschnitt in der Abflussleitung 13 und einer bestimmten Menge des Reinigungsmittels 8 in der erste Kammer 4 eine bestimmte Reinigungsmittelkonzentration in der Reinigungsmittellösung ein, welche kontinuierlich in die Abflussleitung 13 strömt und dadurch zu der Getränkezubereitungsmaschine 15, insbesondere in das Fluidleitungssystem der Getränkezubereitungsmaschine 15, gefördert wird. Dort werden insbesondere die Bauteile der Getränkezubereitungsmaschine 15, welche bei der Herstellung von Getränken mit dem Getränk und / oder den Getränkezutaten (wie bspw. Kaffeepulver, Milch oder Milchschaum) in Kontakt kommen, von der wässrigen Reinigungsmittellösung gereinigt.

Durch die Temperatur und den Druck des in die erste Kammer 4 eingeleiteten Wassers wird eine vollständige Auflösung des festen Reinigungsmittels 8 in der Reinigungsmittellösung gewährleistet. Nach Überführung einer für den Reinigungsvorgang ausreichenden Menge der wässrigen Reinigungsmittellösung wird das Ventil 10 der Wasserleitung 1 geschlossen und dadurch die Wasserzufuhr gestoppt. Danach wird - wie in Figur 2c gezeigt - ein Druckgas, insbesondere Druckluft, über die Druckgasleitung 2 in den oberen Bereich der zweite Kammer 3 eingeleitet, wobei der Druck des Druckgases bevorzugt mehr als 1 bar und insbesondere zwischen 1,5 bar und 3 bar beträgt. Durch den Druck des eingeleiteten Druckgases, welches von der zweiten Kammer 3 über die Verbindungsleitung 18 in die erste Kammer 4 strömt, wird eine sich noch in der ersten Kammer 4 befindliche Restmenge der Reinigungsmittellösung in die Abflussleitung 13 gepresst.

Die Reinigungsvorrichtung kann anstelle des vorbeschriebenen kontinuierlichen Betriebs auch in einem Batchbetrieb betrieben werden, in dem zunächst eine bestimmte Dosis einer Reinigungsmittellösung mit einer bestimmten Konzentration des Reinigungsmittels in der ersten Kammer erzeugt und danach durch die Abflussleitung 13 der Getränkezubereitungsmaschine 15 zugeführt wird. In diesem Batchbetrieb wird das Volumen einer Dosis der erzeugten Reinigungsmittellösung durch die Stellung des ersten Kolbens 6 in der ersten Klammer 4 in seiner Betriebsposition b bestimmt, denn diese Position bestimmt das Volumen der ersten Kammer 4 unterhalb des ersten Kolbens 6, in dem sich das feste Reinigungsmittel 8 befindet. Die Stellung des ersten Kolbens 6 in der ersten Kammer 4 in seiner Betriebsposition kann dabei bei geschlossener Abflussleitung 13 durch den Druck des über die Wasserleitung 1 eingeleiteten Wassers eingestellt werden. Somit kann das Volumen der Dosis der wässrigen Reinigungsmittellösung in der ersten Kammer 4 durch den Wasserdruck variiert werden. Beim Auflösen des festen Reinigungsmittels 8 ergibt sich daher eine bestimmte Konzentration des Reinigungsmittels 8 in der wässrigen Reinigungsmittellösung, welche durch die vorgegebene Menge des Reinigungsmittels 8 in der ersten Kammer 4 und das Volumen der ersten Kammer 4 unterhalb des ersten Kolbens 6 bestimmt ist.

Nach dem Auflösen des Reinigungsmittels 8 in der Reinigungsmittellösung wird der Getränkezubereitungsmaschine 15 über die Abflussleitung 13 die erzeugte Dosis der Reinigungsmittellösung zugeführt, indem bei geschlossenen Ventil 10 in der Wasserleitung 1 die Abflussleitung 13, insbesondere das Ventil 14, geöffnet und ein Druckgas mittels der Druckgasleitung 2 in die erste Kammer 4 eingeleitet wird.. Die Dosis der wässrigen Reinigungsmittellösung weist dabei eine bestimmte Konzentration des Reinigungsmittels in der Reinigungsmittellösung auf, wobei die Konzentration durch die der ersten Kammer 4 zugeführten Menge des Reinigungsmittels 8 und den Wasserdruck bei der Herstellung der Reinigungsmittellösung variiert werden kann. Ein in der Abflussleitung 13 angeordnetes Regelventil 14 ermöglicht beim Ablassen der Reinigungsmittellösung vorteilhaft die Einstellung eines bestimmten Volumenstroms der wässrigen Reinigungsmittellösung aus der ersten Kammer 4 in die Abflussleitung 13.

Nach Überführung der Reinigungsmittellösung aus der ersten Kammer 4 in das Fluidleitungssystem der Getränkezubereitungsmaschine 15 im kontinuierlichen Betrieb oder im Batchbetrieb der Reinigungsvorrichtung ist der Reinigungsvorgang beendet und die Reinigungsvorrichtung wird wieder in ihre Grundposition a gebracht, indem bei geschlossenem Ventil 10 die Zufuhr des Druckgases über die Druckgasleitung 2 gestoppt wird (durch Abschalten der Druckgasquelle 16 oder durch Verschließen der Druckgasleitung 2 mit einem Ventil). Dadurch bewegt sich die Kolbeneinheit, die den ersten Kolben 6, den zweiten Kolben 5 sowie die Verbindungsleitung 18 umfasst, zurück in ihre Grundposition a, welche in Figur 2d gezeigt ist. Dabei wird die Kolbeneinheit aufgrund der Rückstellkraft des Federelements 7 selbsttätig in die Grundposition a gebracht, in welcher der zweite Kolben 5 am Anschlag 21 der zweiten Kammer 3 anliegt und der erste Kolben 6 aus der ersten Kammer 4 zumindest soweit herausgezogen ist, dass sich der erste Kolben 6 oberhalb des Reinigungsmittelzugangs 12 und insbesondere oberhalb der Öffnung in der Wandung der ersten Kammer 4 befindet, wie in Figur 2d dargestellt. In dieser Grundposition a der Reinigungsvorrichtung steht die erste Kammer 4 wieder zur Aufnahme einer vorgegebenen Menge des festen Reinigungsmittels 8 und insbesondere zur Aufnahme einer bestimmten Anzahl von Kugeln oder Tabletten des Reinigungsmittels 8 zur Verfügung und die Reinigungsvorrichtung kann für einen nachfolgenden Reinigungsvorgang eingesetzt werden.

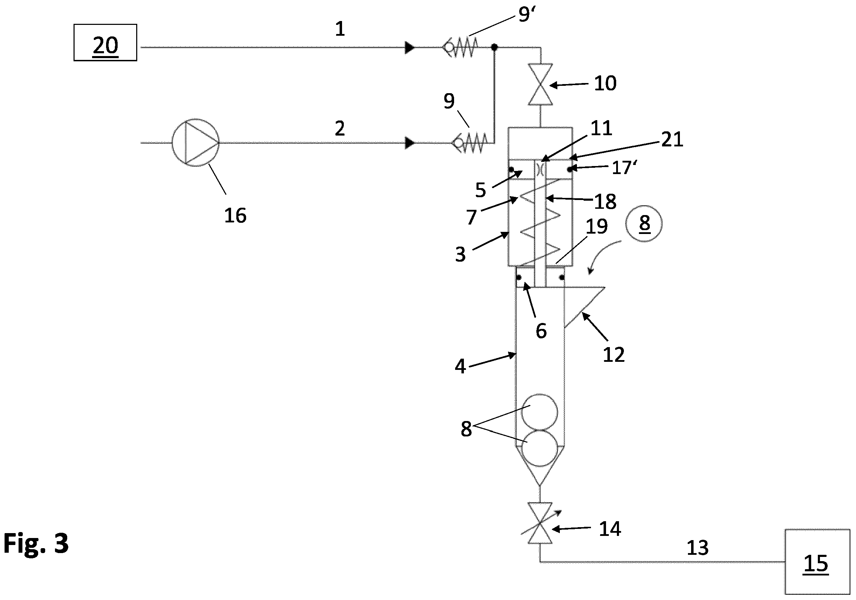

In Fig. 3 ist eine zweite Ausführungsform einer erfindungsgemäßen Reinigungsvorrichtung in der Grundposition gezeigt. Diese Ausführungsform stimmt mit der Reinigungsvorrichtung von Fig. 1 überein, bis auf die Anordnung der Druckgasleitung 2, welche in der Ausführungsform der Fig. 3 nicht in die zweite Kammer 3 sondern in die Wasserleitung 1 mündet. In der Wasserleitung 1 ist dabei ein weiteres Rückschlagventil 9' angeordnet, um zu verhindern, dass Druckgas aus der Druckgasleitung 2 in Richtung des Wasseranschlusses 20 fließen kann. In dieser Ausführungsform wird das Druckgas der Druckgasquelle 16 über die Druckgasleitung 2 in die Wasserleitung 1 geleitet, um bei geöffnetem Ventil 10 in der Wasserleitung 1 die in der ersten Kammer 4 befindliche Reinigungsmittellösung in die Abflussleitung 13 zu drücken, nachdem das Reinigungsmittel vollständig in der Reinigungsmittellösung aufgelöst oder vermischt worden ist. Die Ausführungsform von Fig. 3 zeichnet sich gegenüber der Ausführungsform der Fig. 1 durch einen einfacheren Aufbau der zweiten Kammer 3 aus.

Die Reinigungsvorrichtung gemäß der Erfindung ermöglicht eine schnelle und vollständige Auflösung des festen Reinigungsmittels in der wässrigen Reinigungsmittellösung, insbesondere aufgrund des Drucks und der Temperatur des über die Wasserleitung 1 zugeführten Wassers. Weiterhin wird eine genaue Dosierung einer Menge des festen Reinigungsmittels 8 sowie die Einhaltung einer bestimmten Konzentration des Reinigungsmittels in der wässrigen Reinigungsmittellösung gewährleistet, wobei die genaue Reinigungsmittelkonzentration insbesondere über den Wasserdruck des durch die Wasserleitung 1 zugeführten Wassers gesteuert werden kann. Die Reinigungsvorrichtung weist dabei einen einfachen und kompakten Aufbau auf und benötigt keine motorische Ansteuerung zur Überführung der Reinigungsvorrichtung von ihrer Grundposition a in ihre Betriebsposition b, und zurück.

## Patentansprüche

1. Reinigungsvorrichtung für eine Getränkezubereitungsmaschine (15), insbesondere für eine Kaffeemaschine, umfassend eine erste Kammer (4) zur Aufnahme eines Reinigungsmittels (8) sowie ein mit der ersten Kammer (4) gekoppeltes Flüssigkeitsleitungssystem (1, 13) mit einer an einen Wasseranschluss (20) anschließbare Wasserleitung (1) zur Zufuhr von Wasser und einer an die erste Kammer (4) angeschlossene Abflussleitung (13), welche mit der Getränkezubereitungsmaschine (15) verbindbar ist, wobei die erste Kammer (4) einen Reinigungsmittelzugang (12) aufweist und ein erster Kolben (6) in die erste Kammer (4) einführbar und zwischen einer Grundposition (a), in der der erste Kolben (6) aus der ersten Kammer (4) herausgezogen ist, und einer Betriebsposition (b), in der sich der erste Kolben (6) in der ersten Kammer (4) befindet, beweglich ist, **dadurch gekennzeichnet, dass** der Reinigungsmittelzugang (12) eine Öffnung in einer Wandung der ersten Kammer (4) aufweist und mit einem Reinigungsmittelspender oder einer Dosiervorrichtung verbunden ist, welche das Reinigungsmittel durch den Reinigungsmittelzugang (12) in die erste Kammer (4) dosiert, wobei sich der erste Kolben (6) in seiner Betriebsposition (b) soweit in der ersten Kammer (4) befindet, dass der Reinigungsmittelzugang (12) versperrt ist.

2. Reinigungsvorrichtung nach Anspruch 1, **dadurch gekennzeichnet, dass** der erste Kolben (6) Bestandteil einer Kolbeneinheit (5, 6, 18) ist, welche den ersten Kolben (6), einen beweglich in einer zweiten Kammer (3) angeordneten zweiten Kolben (5) und eine zwischen dem ersten Kolben (6) und dem zweiten Kolben (5) angeordnete Verbindungsleitung (18) umfasst, wobei die zweite Kammer (3) stromaufwärts der ersten Kammer (4) angeordnet ist und über die Verbindungsleitung (18) mit der ersten Kammer (4) fluidleitend in Verbindung steht und eine Bewegung des zweiten Kolbens (5) über die Verbindungsleitung (18) auf den ersten Kolben (6) übertragen wird, wobei in der Verbindungsleitung (18) bevorzugt eine Düse (11) angeordnet ist.

3. Reinigungsvorrichtung nach Anspruch 2, **dadurch gekennzeichnet, dass** die Kolbeneinheit (5, 6, 18) ein Federelement (7) umfasst, wobei das Federelement (7) insbesondere zwischen dem ersten Kolben (6) und dem zweiten Kolben (5) und insbesondere um die Verbindungsleitung (18) angeordnet ist und sich das Federelement (7) bevorzugt an einer Stütze (19) in der zweiten Kammer (3) abstützt und sich insbesondere zwischen der Stütze (19) und dem zweiten Kolben (5) erstreckt, wobei die Stütze (19) bevorzugt in einem Endbereich der zweiten Kammer (3), insbesondere an einem Boden der zweiten Kammer (3), angeordnet ist, wobei das Federelement (7) in einem unbelasteten Zustand eine Vorspannung auf den ersten Kolben (6) ausübt, die den ersten Kolben (6) in seiner Grundposition (a) hält, und/oder der erste Kolben (6) bei einer Zufuhr von Wasser durch die Wasserleitung (1) gegen eine von dem Federelement (7) erzeugte Vorspannung aus seiner Grundposition (a) in seine Betriebsposition (b) bewegbar ist.

4. Reinigungsvorrichtung nach einem der Ansprüche 2 oder 3, **dadurch gekennzeichnet, dass** die zweite Kammer (3) einen Anschlag (21) aufweist, der insbesondere im Bereich des oberen Endes der zweiten Kammer (3) angeordnet ist, wobei der zweite Kolben (5) in einer unbelasteten Grundposition (a) an dem Anschlag (21) anliegt.

5. Reinigungsvorrichtung nach einem der Ansprüche 2 bis 4, **dadurch gekennzeichnet, dass** die zweite Kammer (3) einen größeren Querschnitt und insbesondere einen größeren Durchmesser als die erste Kammer (4) aufweist und/oder dass der zweite Kolben (5) einen größeren Querschnitt und insbesondere einen größeren Durchmesser als der erste Kolben (6) aufweist.

6. Reinigungsvorrichtung nach einem der voranstehenden Ansprüche, **dadurch gekennzeichnet, dass** der Reinigungsmittelzugang (12) in einem oberen Bereich oder an einem oberen Ende der ersten Kammer (4) angeordnet ist, wobei sich der erste Kolben (6) in seiner Betriebsposition (b) soweit in der ersten Kammer (4) befindet, dass ein Zugang von der Öffnung in die erste Kammer (4) versperrt ist.

7. Reinigungsvorrichtung nach einem der Ansprüche 2 bis 6, **dadurch gekennzeichnet, dass** die zweite Kammer (3) mit einer Druckgasleitung (2) verbunden ist, wobei die Druckgasleitung (2) mit einer Druckgasquelle (16) koppelbar ist und bevorzugt in einem oberen Abschnitt oder an einer Oberseite in die zweite Kammer (3) oder in die Wasserleitung (1) mündet.

8. Reinigungsvorrichtung nach einem der voranstehenden Ansprüche, **dadurch gekennzeichnet, dass** in der Wasserleitung (1) ein Sperrventil (10) und/oder ein Regelventil, insbesondere ein Druckregelventil, und/oder ein Druckminderer angeordnet ist und/oder dass in der Abflussleitung (13) ein Sperrventil und/oder ein Regelventil (14) angeordnet ist.

9. Getränkezubereitungsmaschine (15), insbesondere Kaffeemaschine und/oder Maschine zur Herstellung eines Pulvergetränks, mit einer Reinigungsvorrichtung nach einem der voranstehenden Ansprüche, wobei die Getränkezubereitungsmaschine (15) bevorzugt eine Brüheinrichtung zum Brühen eines Heißgetränks und/oder eine Einrichtung zum Erwärmen und/oder Aufschäumen von Milch umfasst und die Reinigungsvorrichtung insbesondere mit der Brüheinrichtung und/oder mit der Einrichtung zum Erwärmen und/oder Aufschäumen von Milch gekoppelt ist.

10. Verfahren zur Reinigung einer Getränkezubereitungsmaschine (15) mit einer Reinigungsvorrichtung umfassend eine erste Kammer (4) und einen darin einführbaren ersten Kolben (6) sowie einen Reinigungsmittelzugang (12), der eine Öffnung in einer Wandung der ersten Kammer (4) aufweist und mit einem Reinigungsmittelspender oder einer Dosiervorrichtung verbunden ist, wobei mittels des Reinigungsmittelspenders oder der Dosiervorrichtung eine bestimmte Menge eines bevorzugt festen Reinigungsmittels (8) durch den Reinigungsmittelzugang (12) in die erste Kammer (4) dosiert wird und anschließend über eine an einen Wasseranschluss (20) anschließbare Wasserleitung (1) Wasser in die erste Kammer (4) geleitet wird, während der erste Kolben (6) in einer Betriebsposition in der ersten Kammer (4) eingeführt ist, wodurch das Reinigungsmittel (8) in einer Reinigungsmittellösung aufgelöst oder/und vermischt wird und die Reinigungsmittellösung der Getränkezubereitungsmaschine (15) über eine an die erste Kammer (4) angeschlossene Abflussleitung (13) zugeführt wird, wobei der erste Kolben (6) zwischen einer Grundposition (a), in der der erste Kolben (6) aus der ersten Kammer (4) herausgezogen ist, und einer Betriebsposition (b), in der sich der erste Kolben (6) in der ersten Kammer (4) befindet, beweglich ist und sich der erste Kolben (6) in seiner Betriebsposition (b) soweit in der ersten Kammer (4) befindet, dass der Reinigungsmittelzugang (12) versperrt ist.

11. Verfahren nach Anspruch 10, **wobei** das in die erste Kammer (4) geleitete Wasser eine Temperatur von mindestens 40°C, bevorzugt von mehr als 60°C und insbesondere von 60°C bis 100°C aufweist.

12. Verfahren nach einem der Ansprüche 10 oder 11, **dadurch gekennzeichnet, dass** die erste Kammer (4) fluidleitend mit einer zweiten Kammer (3) gekoppelt und die Wasserleitung (1) mit der zweiten Kammer (3) verbunden ist, um Wasser in die zweite Kammer (3) und die erste Kammer (4) zu leiten, wobei nach der Dosierung des Reinigungsmittels in die erste Kammer (4) der erste Kolben (6) in die erste Kammer (4) in seiner Betriebsposition eingeführt wird und nach dem Einführen des ersten Kolbens (6) in die erste Kammer (4) das Wasser durch eine Verbindungsleitung (18) in die erste Kammer (4) eingeleitet wird, wobei die Verbindungsleitung (18) bevorzugt durch den ersten Kolben (6) verläuft.

13. Verfahren nach Anspruch 12, **dadurch gekennzeichnet, dass** der erste Kolben (6) über die Verbindungsleitung (18) an einen zweiten Kolben (5) gekoppelt und der zweite Kolben (5) beweglich in der zweiten Kammer (3) angeordnet ist, wobei die erste Kammer (4) über die Verbindungsleitung (18) fluidleitend mit der zweiten Kammer (3) gekoppelt und die Wasserleitung (1) mit der zweiten Kammer (3) verbunden ist und der erste Kolben (6) bei einer Zufuhr von Wasser durch die Wasserleitung (1) durch einen vom eingeleiteten Wasser erzeugten Druck in die erste Kammer (4) gedrückt wird, indem der vom eingeleiteten Wasser erzeugte Druck auf den zweiten Kolben (5) einwirkt und von diesem auf den ersten Kolben (6) übertragen wird.

14. Verfahren nach einem der Ansprüche 10 bis 13, **dadurch gekennzeichnet, dass** nach der Erzeugung der Reinigungsmittellösung durch Auflösen oder Vermischen des Reinigungsmittels (8) in dem Wasser, das der ersten Kammer (4) zugeführt worden ist, zunächst die Zufuhr von Wasser gestoppt und danach die Reinigungsmittellösung durch Einleiten eines Druckgases in die erste Kammer (4) von der ersten Kammer (4) in die Abflussleitung (13) gedrückt wird und dass bevorzugt das Einleiten des Druckgases in die erste Kammer (4) gestoppt wird, wenn die Reinigungsmittellösung vollständig in die Abflussleitung (13) überführt worden ist, wobei sich bevorzugt der erste Kolben (6) nach Beendigung des Einleitens des Druckgases selbsttätig aufgrund einer Rückstellkraft aus der ersten Kammer (4) in seine Grundposition (a) herausbewegt.

15. Verfahren nach einem der Ansprüche 10 bis 14, **dadurch gekennzeichnet, dass** in der Abflussleitung (13) ein Sperrventil und/oder ein Regelventil (14) zum Öffnen und Schließen der Abflussleitung (13) angeordnet ist, wobei entweder bei zumindest teilweise geöffneter Abflussleitung (13) oder bei geschlossener Abflussleitung (13) Wasser durch die erste Kammer (4) geleitet wird, wodurch das Reinigungsmittel (8) in einer Reinigungsmittellösung aufgelöst oder vermischt und die Reinigungsmittellösung durch die zumindest teilweise geöffnete Abflussleitung (13) oder nach Öffnen der zunächst geschlossenen Abflussleitung (13) zur Getränkezubereitungsmaschine (15) abgeführt wird.

## Claims

1. Cleaning device for a beverage preparation machine (15), in particular for a coffee machine, comprising a first chamber (4) for receiving a cleaning agent (8) and a liquid pipe system (1, 13) coupled to the first chamber (4) and having a water pipe (1) for supplying water which can be connected to a water connection (20), and a discharge line (13) which is connected to the first chamber (4) and which can be connected to the beverage preparation machine (15), wherein the first chamber (4) has a cleaning agent access (12) and a first piston (6) can be inserted into the first chamber (4) and moved between a base position (a), in which the first piston (6) is pulled out of the first chamber (4), and an operating position (b), in which the first piston (6) is located in the first chamber (4), **characterised in that** the cleaning agent access (12) has an opening in the first chamber (4) and is connected to a cleaning agent dispenser or a dosing device, which doses the cleaning agent through the cleaning agent access (12) into the first chamber (4), wherein the first piston (6) in its operating position (b) is located in the first chamber (4) to such an extent that the cleaning agent access (12) is blocked.

2. Cleaning device according to claim 1, **characterised in that** the first piston (6) is part of a piston unit (5, 6, 18) which comprises the first piston (6), a second piston (5) arranged movably in a second chamber (3) and a connecting line (18) arranged between the first piston (6) and the second piston (5), wherein the second chamber (3) is arranged upstream of the first chamber (4) and is in fluid-conducting connection with the first chamber (4) via the connecting line (18) and a movement of the second piston (5) is transmitted to the first piston (6) via the connecting line (18), wherein a nozzle (11) is preferably arranged in the connecting line (18).

3. Cleaning device according to claim 2, **characterised in that** the piston unit (5, 6, 18) comprises a spring element (7) located in particular between the first piston (6) and the second piston (5) and in particular around the connecting line (18), and the spring element (7) is preferably supported on a support (19) in the second chamber (3) and extends in particular between the support (19) and the second piston (5), the support (19) preferably is arranged in an end region of the second chamber (3), in particular on a base of the second chamber (3), wherein in an unloaded state, the spring element (7) exerts a preload on the first piston (6), which holds the first piston (6) in its base position (a), and/or the first piston (6), when water is supplied through the water pipe (1), can be moved from its base position (a) to its operating position (b) against a preload generated by the spring element (7).

4. Cleaning device according to any one of claims 2 or 3, **characterised in that** the second chamber (3) has a stop (21), which is arranged in particular in the region of the upper end of the second chamber (3), wherein the second piston (5) in an unloaded base position (a) is contacting the stop (21).

5. Cleaning device according to any one of claims 2 to 4, **characterised in that** the second chamber (3) has a larger cross-section, and in particular a larger diameter, than the first chamber (4) and/or that the second piston (5) has a larger cross-section, and in particular a larger diameter, than the first piston (6).

6. Cleaning device according to any one of the preceding claims, **characterised in that** the cleaning agent access (12) is in an upper region or at an upper end of the first chamber (4), wherein the first piston (6) in its operating position (b) is located in the first chamber (4) to such an extent that access from the opening into the first chamber (4) is blocked.

7. Cleaning device according to any one of claims 2 to 6, **characterised in that** the second chamber (3) is connected to a compressed gas line (2), wherein the compressed gas line (2) can be coupled to a compressed gas source (16) and preferably opens into the second chamber (3) or into the water pipe (1) in an upper section or at an upper side.

8. Cleaning device according to any one of the preceding claims, **characterised in that** a shut-off valve (10) and/or a control valve, in particular a pressure control valve, and/or a pressure reducer is arranged in the water pipe (1) and/or that a shut-off valve and/or a control valve (14) is arranged in the discharge line (13).

9. Beverage preparation machine (15), in particular coffee machine and/or machine for preparing a powdered beverage, with a cleaning device according to any one of the preceding claims, wherein the beverage preparation machine (15) preferably comprises a brewing device for brewing of a hot beverage and/or a device for heating and/or frothing of milk, and the cleaning device is coupled in particular to the brewing device and/or to the device for heating and/or frothing of milk.

10. Method for cleaning a beverage preparation machine (15) having a cleaning device comprising a first chamber (4) and a first piston (6) insertable therein as well as a cleaning agent access (12) which has an opening in a wall of the first chamber (4) and is connected to a cleaning agent dispenser or a dosing device, wherein by means of the cleaning agent dispenser or the dosing device a defined amount of a preferably solid cleaning agent (8) is dosed through the cleaning agent access (12) into the first chamber (4) and then water is fed into the first chamber (4) via a water pipe (1) that can be connected to a water connection (20),while the first piston (6) is inserted in an operating position in the first chamber (4), whereby the cleaning agent (8) is dissolved or/and mixed in a cleaning agent solution, and the cleaning agent solution is fed to the beverage preparation machine (15) via a discharge line (13) connected to the first chamber (4), wherein the first piston (6) is movable between a base position (a), in which the first piston (6) is pulled out of the first chamber (4), and an operating position (b), in which the first piston (6) is inside the first chamber (4), and the first piston (6) is located in its operating position (b) in the first chamber (4) to such an extent that the cleaning agent access (12) is blocked.

11. Method according to claim 10, **wherein** the water fed into the first chamber (4) has a temperature of at least 40°C, preferably more than 60°C and in particular from 60°C to 100°C.

12. Method according to any one of claims 10 or 11, **characterised in that** the first chamber (4) is fluidly coupled to a second chamber (3) and the water pipe (1) is connected to the second chamber (3) to supply water into the second chamber (3) and the first chamber (4), wherein, after the dosing of the cleaning agent into the first chamber (4), the first piston (6) is introduced into the first chamber (4) in its operating position and after introduction of the first piston (6) into the first chamber (4) the water is introduced into the first chamber (4) through a connecting line (18), with the connecting line (18) preferably running through the first piston (6).

13. Method according to claim 12, **characterised in that** the first piston (6) is coupled to a second piston (5) via the connecting line (18) and the second piston (5) is arranged movably in the second chamber (3), wherein the first chamber (4) is connected via the connecting line (18) to the second chamber (3) in a fluid-conducting manner, and the water pipe (1) is connected to the second chamber (3) and, when water is supplied through the water pipe (1), the first piston (6) is pressed into the first chamber (4) by a pressure generated by the introduced water, wherein the pressure generated by the introduced water is applied to the second piston (5) and is transferred from this to the first piston (6).

14. Method according to any one of claims 10 to 13, **characterised in that**, after the cleaning solution has been produced by dissolving or mixing the cleaning agent (8) in the water that has been supplied to the first chamber (4), the supply of water is stopped and then the cleaning agent solution is removed from the first chamber (4) and pressed into the discharge line (13) by introducing a pressurised gas into the first chamber (4), and that preferably the introduction of the pressurised gas into the first chamber (4) is stopped when the cleaning solution has been completely transferred into the discharge line (13), whereby the first piston (6) preferably moves out of the first chamber (4) into its base position (a) automatically due to a restoring force after the pressurised gas has been introduced.

15. Method according to any one of claims 10 to 14, **characterised in that** a shut-off valve and/or a control valve (14) for opening and closing the discharge line (13) is arranged in the discharge line (13), whereby either when the discharge line (13) is at least partially open or when the discharge line (13) is closed, water is passed through the first chamber (4), whereby the cleaning agent (8) is dissolved or mixed into a cleaning solution and the cleaning solution is discharged to the beverage preparation machine (15) through the at least partially opened discharge line (13) or after opening the initially closed discharge line (13).

## Revendications

1. Dispositif de nettoyage pour une machine de préparation de boissons (15), en particulier pour une machine à café, comprenant une première chambre (4) pour la réception d'un produit de nettoyage (8) ainsi qu'un système de conduite de liquide (1, 13) couplé à la première chambre (4) avec une conduite d'eau (1) pouvant être raccordée à un raccordement d'eau (20) pour l'amenée d'eau et une conduite d'évacuation (13) raccordée à la première chambre (4), laquelle conduite d'évacuation peut être reliée à la machine de préparation de boissons (15), dans lequel la première chambre (4) présente un accès de produit de nettoyage (12) et un premier piston (6) peut être inséré dans la première chambre (4) et est mobile entre une position de base (a), dans laquelle le premier piston (6) est retiré de la première chambre (4), et une position de fonctionnement (b), dans laquelle le premier piston (6) se trouve dans la première chambre (4), **caractérisé en ce que** l'accès de produit de nettoyage (12) présente une ouverture dans une paroi de la première chambre (4) et est relié à un distributeur de produit de nettoyage ou à un dispositif de dosage, lequel dose le produit de nettoyage à travers l'accès de produit de nettoyage (12) jusque dans la première chambre (4), dans lequel le premier piston (6) dans sa position de fonctionnement (b) se trouve dans la première chambre (4) tant que l'accès de produit de nettoyage (12) est verrouillé.

2. Dispositif de nettoyage selon la revendication 1, **caractérisé en ce que** le premier piston (6) fait partie d'une unité de pistons (5, 6, 18), laquelle comprend le premier piston (6), un second piston (5) agencé de façon mobile dans une seconde chambre (3) et une conduite de liaison (18) agencée entre le premier piston (6) et le second piston (5), dans lequel la seconde chambre (3) est agencée en amont de la première chambre (4) et se trouve en liaison avec la première chambre (4) de façon à conduire un fluide via la conduite de liaison (18) et un mouvement du second piston (5) est transmis au premier piston (6) via la conduite de liaison (18), dans lequel de préférence une buse (11) est agencée dans la conduite de liaison (18).

3. Dispositif de nettoyage selon la revendication 2, **caractérisé en ce que** l'unité de pistons (5, 6, 18) comprend un élément de ressort (7), dans lequel l'élément de ressort (7) est agencé en particulier entre le premier piston (6) et le second piston (5) et en particulier autour de la conduite de liaison (18) et l'élément de ressort (7) s'appuie de préférence contre un appui (19) dans la seconde chambre (3) et s'étend en particulier entre l'appui (19) et le second piston (5), dans lequel l'appui (19) est agencé de préférence dans une région d'extrémité de la seconde chambre (3), en particulier contre un fond de la seconde chambre (3), dans lequel l'élément de ressort (7) exerce dans un état non chargé une précontrainte sur le premier piston (6), laquelle maintient le premier piston (6) dans sa position de base (a), et/ou le premier piston (6) peut être déplacé lors d'une amenée d'eau à travers la conduite d'eau (1) à l'encontre d'une précontrainte produite par l'élément de ressort (7)depuis sa position de base (a) jusque dans sa position de fonctionnement (b).

4. Dispositif de nettoyage selon l'une des revendications 2 ou 3, **caractérisé en ce que** la seconde chambre (3) présente une butée (21), laquelle est en particulier agencée dans la région de l'extrémité supérieure de la seconde chambre (3), dans lequel le second piston (5) dans une position de base (a) non chargée s'applique contre la butée (21).

5. Dispositif de nettoyage selon l'une des revendications 2 à 4, **caractérisé en ce que** la seconde chambre (3) présente une coupe transversale supérieure et en particulier un diamètre supérieur à celle/celui de la première chambre (4) et/ou **en ce que** le second piston (5) présente une coupe transversale supérieure et en particulier un diamètre supérieur à celle/celui du premier piston (6).

6. Dispositif de nettoyage selon l'une des revendications précédentes, **caractérisé en ce que** l'accès de produit de nettoyage (12) est agencé dans une région supérieure ou contre une extrémité supérieure de la première chambre (4), dans lequel le premier piston (6) dans sa position de fonctionnement (b) se trouve dans la première chambre (4) tant qu'un accès depuis l'ouverture jusque dans la première chambre (4) est verrouillé.

7. Dispositif de nettoyage selon l'une des revendications 2 à 6, **caractérisé en ce que** la seconde chambre (3) est reliée à une conduite de gaz sous pression (2), dans lequel la conduite de gaz sous pression (2) peut être couplée à une source de gaz sous pression (16) et débouche de préférence dans une section supérieure ou contre un côté supérieur jusque dans la seconde chambre (3) ou dans la conduite d'eau (1).

8. Dispositif de nettoyage selon l'une des revendications précédentes, **caractérisé en ce que** dans la conduite d'eau (1) est agencé(e) une soupape d'arrêt (10) et/ou une soupape de régulation, en particulier une soupape de régulation de pression, et/ou un réducteur de pression et/ou **en ce que** dans la conduite d'évacuation (13) est agencée une soupape d'arrêt et/ou une soupape de régulation (14).

9. Machine de préparation de boissons (15), en particulier machine à café et/ou machine de fabrication d'une boisson en poudre, avec un dispositif de nettoyage selon l'une des revendications précédentes, dans laquelle la machine de préparation de boissons (15) comprend de préférence un équipement de percolation pour percoler une boisson chaude et/ou un équipement pour réchauffer et/ou faire mousser du lait et le dispositif de nettoyage est en particulier couplé à l'équipement de percolation et/ou à l'équipement pour réchauffer et/ou faire mousser du lait.

10. Procédé destiné à nettoyer une machine de préparation de boissons (15) avec un dispositif de nettoyage comprenant une première chambre (4) et un premier piston (6) pouvant y être inséré ainsi qu'un accès de produit de nettoyage (12) qui présente une ouverture dans une paroi de la première chambre (4) et qui est relié à un distributeur de produit de nettoyage ou à un dispositif de dosage, dans lequel une quantité déterminée d'un produit de nettoyage (8) de préférence solide peut être dosée à travers l'accès de produit de nettoyage (12) jusque dans la première chambre (4) au moyen du distributeur de produit de nettoyage ou du dispositif de dosage, puis de l'eau est conduite jusque dans la première chambre (4) via une conduite d'eau (1) pouvant être raccordée à un raccordement d'eau (20) tandis que le premier piston (6) dans une position de fonctionnement est introduit dans la première chambre (4), moyennant quoi le produit de nettoyage (8) est solutionné et/ou mélangé dans une solution de produit de nettoyage et la solution de produit de nettoyage est amenée à la machine de préparation de boissons (15) via une conduite d'évacuation (13) raccordée à la première chambre (4), dans laquelle le premier piston (6) est mobile entre une position de base (a), dans laquelle le premier piston (6) est retiré de la première chambre (4), et une position de fonctionnement (b), dans laquelle le premier piston (6) se trouve dans la première chambre (4), et le premier piston (6) dans sa position de fonctionnement (b) se trouve dans la première chambre (4) tant que l'accès de produit de nettoyage (12) est verrouillé.

11. Procédé selon la revendication 10, dans lequel l'eau conduite jusque dans la première chambre (4) présente une température d'au moins 40 °C, de préférence de plus de 60 °C et en particulier de 60 °C à 100 °C.

12. Procédé selon l'une des revendications 10 ou 11, **caractérisé en ce que** la première chambre (4) est couplée à une seconde chambre (3) de façon à conduire un fluide et la conduite d'eau (1) est reliée à la seconde chambre (3) pour conduire de l'eau jusque dans la seconde chambre (3) et la première chambre (4), dans lequel après le dosage du produit de nettoyage jusque dans la première chambre (4) le premier piston (6) est inséré dans sa position de fonctionnement dans la première chambre (4) et après l'insertion du premier piston (6) dans la première chambre (4) l'eau est introduite jusque dans la première chambre (4) par une conduite de liaison (18), dans lequel la conduite de liaison (18) se déroule de préférence à travers le premier piston (6).

13. Procédé selon la revendication 12, **caractérisé en ce que** le premier piston (6) est couplé à un second piston (5) via la conduite de liaison (18) et le second piston (5) est agencé de façon mobile dans la seconde chambre (3), dans lequel la première chambre (4) est couplée à la seconde chambre (3) de façon à conduire un fluide via la conduite de liaison (18) et la conduite d'eau (1) est reliée à la seconde chambre (3) et le premier piston (6) lors d'une amenée d'eau à travers la conduite d'eau (1) est poussé jusque dans la première chambre (4) par une pression produite par l'eau qui est introduite **en ce que** la pression produite par l'eau qui est introduite agit sur le second piston (5) et est transmise par celui-ci au premier piston (6).

14. Procédé selon l'une des revendications 10 à 13, **caractérisé en ce qu'**après la production de la solution de produit de nettoyage en solutionnant ou mélangeant le produit de nettoyage (8) dans l'eau qui a été amenée à la première chambre (4), l'amenée d'eau est tout d'abord arrêtée et la solution de produit de nettoyage est ensuite poussée depuis la première chambre (4) jusque dans la conduite d'évacuation (13) par l'introduction d'un gaz sous pression dans la première chambre (4) et **en ce que** de préférence l'introduction du gaz sous pression dans la première chambre (4) est arrêtée lorsque la solution de produit de nettoyage a été entièrement transférée dans la conduite d'évacuation (13), dans lequel de préférence le premier piston (6) se déplace automatiquement du fait d'une force de rappel hors de la première chambre (4) jusque dans sa position de base (a) après achèvement de l'introduction du gaz sous pression.

15. Procédé selon l'une des revendications 10 à 14, **caractérisé en ce que** dans la conduite d'évacuation (13) est agencée une soupape d'arrêt et/ou une soupape de régulation (14) pour l'ouverture et la fermeture de la conduite d'évacuation (13), dans lequel de l'eau est conduite à travers la première chambre (4) soit lorsque la conduite d'évacuation (13) est au moins partiellement ouverte soit lorsque la conduite d'évacuation (13) est fermée, moyennant quoi le produit de nettoyage (8) est solutionné ou mélangé dans une solution de produit de nettoyage et la solution de produit de nettoyage est emmenée vers la machine de préparation de boissons (15) à travers la conduite d'évacuation (13) au moins partiellement ouverte ou après ouverture de la conduite d'évacuation (13) fermée au préalable.
